# EUROPÄISCHE PATENTSCHRIFT

(11) **EP 0 849 894 B1**
(45) Veröffentlichungstag und Bekanntmachung des Hinweises auf die Patenterteilung: **21.05.2003**
(21) Anmeldenummer: 97116148.4
(22) Anmeldetag: 17.09.1997
(51) Int. Cl.: H04B 10/10, H01S 3/23

(54) **Verfahren und Anordnung zum Betreiben eines Laser-Systems für optische Freiraum-Kommunikation**
Method and device for driving a laser system for free space optical communication
Procédé et dispositif pour commander un système laser pour communication optique en espace libre

(30) Priorität: 20.12.1996 CH 314696
(43) Veröffentlichungstag der Anmeldung: 24.06.1998
(73) Patentinhaber: Contraves Space AG, 8052 Zürich (CH)
(72) Erfinder: Mayor, Jean-Michel, Dipl. phys. Ing. EPFL, 1400 Yverdon-les-Bains (CH); Graf, Thomas, Dr. Sc. nat., 3012 Bern (CH); Balmer, Jürg, PD, Dr. Sc. nat., 2503 Biel (CH)
(74) Vertreter: Hotz, Klaus, Dipl.-El.-Ing./ETH

(56) Entgegenhaltungen:
- US-A- 5 249 196
- BAER T M ET AL: "PERFORMANCE OF DIODE-PUMPED ND: YAG AND ND: YLF LASERS IN A TIGHTLY FOLDED RESONATOR CONFIGURATION" IEEE JOURNAL OF QUANTUM ELECTRONICS, Bd. 28, Nr. 4, 1.April 1992, Seiten 1131-1138, XP000272705
- CARLSON R T ET AL: "Monolithic glass block lasercom terminal: Hardware proof of concept and test results" FREE-SPACE LASER COMMUNICATION TECHNOLOGIES VII, SAN JOSE, CA, USA, 7-8 FEB. 1995, Bd. 2381, ISSN 0277-786X, PROCEEDINGS OF THE SPIE - THE INTERNATIONAL SOCIETY FOR OPTICAL ENGINEERING, 1995, SPIE-INT. SOC. OPT. ENG, USA, Seiten 90-102, XP002061601
- MELLISH R ET AL: "DIODE-PUMPED CR:LISAF ALL-SOLID-STATE FEMTOSECOND OSCILLATOR AND REGENERATIVE AMPLIFIER" OPTICS LETTERS, Bd. 20, Nr. 22, 15.November 1995, Seiten 2312-2314, XP000537161
- KANE T J ET AL: "Diode-pumped Nd:YAG amplifier with 52-dB gain" FREE-SPACE LASER COMMUNICATION TECHNOLOGIES VII, SAN JOSE, CA, USA, 7-8 FEB. 1995, Bd. 2381, ISSN 0277-786X, PROCEEDINGS OF THE SPIE - THE INTERNATIONAL SOCIETY FOR OPTICAL ENGINEERING, 1995, SPIE-INT. SOC. OPT. ENG, USA, Seiten 273-284, XP002061603
- MARSHALEK R G ET AL: "Lightweight, high-data-rate laser communications terminal for low-Earth-orbit satellite constellations" FREE-SPACE LASER COMMUNICATION TECHNOLOGIES VII, SAN JOSE, CA, USA, 7-8 FEB. 1995, Bd. 2381, ISSN 0277-786X, PROCEEDINGS OF THE SPIE - THE INTERNATIONAL SOCIETY FOR OPTICAL ENGINEERING, 1995, SPIE-INT. SOC. OPT. ENG, USA, Seiten 72-82, XP002029755
- KRAINAK M A ET AL: "1047-NM MASTER OSCILLATOR POWER AMPLIFIER FREE-SPACE OPTICAL COMMUNICATIONS LASER TRANSMITTER" IEEE JOURNAL OF QUANTUM ELECTRONICS, Bd. 32, Nr. 1, 1.Januar 1996, Seiten 112-117, XP000548684
- YANOVSKY V P ET AL: "COMPACT, SINGLE-FREQUENCY, HIGH-POWER ND: GLASS LASER" IEEE JOURNAL OF QUANTUM ELECTRONICS, Bd. 30, Nr. 4, 1.April 1994, Seiten 884-886, XP000456784

## Beschreibung

Die vorliegende Erfindung betrifft ein Verfahren und eine Anordnung zum Betreiben eines Laser-Systems für optische Freiraum-Kommunikation, insbesondere das Erzeugen verstärkten Laserlichts unter Weltraumbedingungen.

Die optische Freiraum-Kommunikation zwischen Satelliten sowie zwischen Satellit und Bodenstation werden in naher Zukunft eine wichtige und an Bord der Satelliten eine gewichtssparende Ergänzung zur bestehenden Mikrowellentechnik darstellen. Sogenannte optische Terminals bestehen aus einem oder mehreren Teleskopen, welche den Winkelbereich des Gesichtsfeldes eines optischen Empfängers in Richtung einer Gegenstation einschränken sowie für eine gerichtete Abstrahlung der zu sendenden Signale sorgen. Weiterhin sind mehrere bewegliche Spiegel vorhanden, durch welche die Ausrichtung von Sende- und Empfangsrichtung vorgenommen wird. Neben der direkten Detektion der optischen Leistung des Senders der Gegenstation als Übertragungsverfahren spielt auch die kohärente Überlagerung des empfangenenen Lichts mit dem gleichfrequenten Licht eines Lokaloszillator-Lasers eine bedeutende Rolle, da neben einer grossen Empfindlichkeit für das zu detektierende Signal die Unempfindlichkeit für Störungen durch im Hintergrund vorhandene Strahlung ins Gewicht fällt.

Bei allen infolge genannten Verfahren sind mehrere Laser erforderlich. Zum einen, um die Lichtleistung für den optischen Sender zur Verfügung zu stellen, zum anderen, um Lichtleistung für eine sogenannte Bake (Beacon) zu erzeugen. Dies ist ein optischer Sender, der unmoduliert -mit im Verhältnis zum für die Kommunikation vorgesehenen Sender stark erhöhter optischer Leistung in einen grösseren Raumwinkel abstrahlt, um einer Gegenstation die Ausrichtung ihres Sendestrahls auf den eigenen Empfänger zu ermöglichen.

Kohärente Verfahren benötigen zusätzlich einen Lokaloszillator-Laser, dessen Licht auf dem Photodetektor des Empfängers mit dem empfangenen Licht überlagert wird. Für all diese Zwecke stehen mehrere Lasertypen zur Auswahl. Gaslaser bieten den Vorteil, wegen der sogenannt homogenen spektralen Verbreiterung ihres optischen Gewinns nur auf einer einzigen optischen Frequenz Licht zu emittieren, obwohl Resonatoren von Lasern ohne besondere Massnahmen Resonanzen auf einer ganzen Reihe von äquidistanten Frequenzen aufweisen. Allerdings weist dieser Lasertyp eine für Anwendungen im Weltraum völlig unzureichende Lebensdauer und Zuverlässigkeit auf. Die durch ihre extensive Anwendung in der faseroptischen Kommunikation einen hohen Entwicklungsstand erreicht habenden Diodenlaser wiederum stellen zumindest für einfache mit Intensitätsmodulation arbeitenden Systeme eine zudem noch Platz und Gewicht sparende Alternative dar, eignen sich aber trotz des inzwischen auch hier erreichten Betriebs auf nur einer optischen Frequenz im allgemeinen noch nicht für kohärente Übertragungsverfahren, abgesehen von komplizierten Konstruktionen mit grossen angekoppelten zusätzlichen Resonatoren. Ein Grund liegt in der noch zu grossen spektralen Breite dieser einen abgestrahlten optischen Frequenz. Zwar arbeiten faseroptische kohärente Übertragungssysteme auch mit handelsüblichen Diodenlasern, wobei allerdings aufgrund leitungsgebundener Übertragung bei relativ hoher optischer Leistung detektiert wird.

Die bei Freiraumübertragung vorhandene störende Hintergrundstrahlung sowie die meistens sehr geringe Leistung des empfangenen Signals erfordern jedoch eine optische Bandbreite des unmodulierten Signals, die wesentlich niedriger ist als die Modulationsbandbreite. Dies sind Kriterien, die zusammen mit geringer Grösse und niedrigem Gewicht am besten durch diodenlasergepumpte Festkörperlaser erfüllt werden können. Bestehende Ansätze, die zum Betrieb notwendigen Lasersysteme in ein Terminal zur optischen Freiraum-Kommunikation zu integrieren, sind von Carlson et al. sowie Marshalek et al. beschrieben (R.T.Carlson et al., Monolithic glass block lasercom terminal: hardware proof of concept and test results, SPIE vol. 2381, Free-space laser communication technologies VII, 7-8 Febr, 1995, San Jose, California, p. 90-102; R. G. Marhsalek et al., Lightweight, high- data-rate laser communications terminal for low-Earth-orbit satellite constellations, SPIE vol. 2381, Free-space laser communication technologies VII, 7-8 Febr, 1995, San Jose, California, p. 72-82).

Beide Autorengruppen beschreiben Lasersysteme, die mechanisch an die Optik eines Terminals angekoppelt sind und ihre Lichtemission über kollimierte Strahlen in die Optik führen. Allerdings sind hierbei beim Stand der Technik Diodenlaser zur Anwendung gekommen.

Diodenlasergepumpte Festkörperlaser weisen ein grösseres Volumen und eine geringere Effizienz auf, erzeugen also ein grösseres Mass an Abwärme als vergleichbare Diodenlaser. Das höhere Mass an in der Nähe des optischen Systems produzierter Wärme erweist sich als Risiko für den störungsfreien Betrieb der Optik.

Ein weiteres Problem stellt die mangelhafte Modulierbarkeit von diodengepumpten Festkörperlasern dar. Im Unterschied zu Diodenlasem verharrt das den optischen Gewinn erzeugende Medium nach Zufuhr von Pumpenergie relativ lange in einem angeregten Zustand. Weiterhin ist der Resonator solcher Laser wesentlich grösser als der von Diodenlasem. Folglich sind z.B. für Amplitudenmodulation Grenzfrequenzen von etwa 100 kHz die Regel. Die deshalb nötige externe Modulation ist auch recht schwierig zu vollführen, da eine hohe optische Leistung handzuhaben ist, was den Einsatz elektrooptischer Modulatoren mit niedrigerer Grenzfrequenz bedingt.

Die externe Modulation von Laserlicht kann mit einer hohen Grenzfrequenz in Modulatoren vorgenommen werden, in welchen das Licht in einem Wellenleiter geführt wird, der einen geringen gegenseitigen Abstand der die modulierende Spannung führenden Elektroden und somit eine geringere Modulationsspannung erlaubt. Da dieses Verfahren wegen der durch den geringen Querschnitt des optischen Wellenleiters bedingten starken Überhöhung der optischen Intensitätsdichte nur niedrige optische Leistungen zulässt, muss das modulierte optische Signal nachverstärkt werden. Ansätze hierzu bestehen zum einen in der Übernahme von inzwischen in der fasergebundenen optischen Kommunikation bewährten Verfahren und Vorrichtungen, z. B. durch Nachverstärkung des modulierten optischen Signals mittels eines Erbium dotierten Faserverstärkers (T. Araki, M. Yajima, S. Nakamori, Y. Hisada, Laser transmitter systems for high - data - rate optical inter - orbit communications, SPIE vol. 2381, Free-space laser communication technologies VII, 7-8 Febr, 1995, San Jose, California, p. 264 - 272).

Neben Diodenlaser - gepumpten Festkörperlasern finden auch entsprechende Wanderwellen - Verstärker Verwendung, womit speziell zur Nachverstärkung von Licht aus mit derselben Technologie arbeitenden Lasern geeignete Vorrichtungen zur Verfügung stehen, besonders für die wegen ihrer geringen spektralen Breite für die optische Freiraum - Kommuniation sehr nützlichen Diodenlaser - gepumpten Neodym-YAG-Festkörperlaser. Das zu verstärkende Licht wird in einen verstärkenden Kristall geführt, in welchem die Photonen des Lichtstrahls mit einer gewissen Wahrscheinlichkeit auf Atome stossen, die sich in einem optisch angeregten, aber durch besondere Eigenschaften des Materials dennoch zeitlich verhältnismässig stabilen Zustand befinden. Die relative Stabilität dieses Zustands wird nur durch ein Photon gestört, welches dieselbe Energie aufweist wie die Differenz zwischen angeregtem Zustand und Grundzustand des Atoms, wobei das entsprechende Atom ein zusätzliches Photon derselben Energie, d.h. derselben Wellenlänge und Phase freigibt.

Der angeregte Zustand der Atome wird durch sogenanntes Pumplicht hergestellt, welches eine kürzere Wellenlänge als das zu verstärkende Licht aufweist und die Atome in einen der Energie seiner Photonen entsprechenden angeregten Zustand versetzt, aus welchem dieselben spontan in einen relativ stabilen Zustand, dessen Energiedifferenz zum nicht angeregten Grundzustand der Energie der Photonen des zu verstärkenden Lichts entspricht. Eine hohe Verstärkung von Licht wird erzielt, wenn die Photonen des zu verstärkenden Lichts beim Durchgang durch das verstärkende Medium auf viele angeregte Atome stossen. Folglich muss die Volumendichte angeregter Atome hoch sein. Da aber ein gewisser Anteil der angeregten Atome je Zeiteinheit infolge einer endlichen mittleren Lebensdauer des angeregten Zustands spontan in den Grundzustand übergeht, dass dabei emittierte Photon aber für die Verstärkung des eingekoppelten Lichts verlorengeht, muss bei einer hohen Volumendichte angeregter Atome auch bei fehlendem zu verstärkendem Licht ständig Pumplicht mit hoher Leistung in das Medium eingestrahlt werden, um die hohe Volumendichte angeregter Atome zu erhalten, wodurch daher bei hohen Verstärkungsfaktoren solcher Vorrichtungen auch deren Wirkungsgrad extrem schlecht ist. Sehr niedrige Verstärkungsfatoren sind zu beobachten, wenn das zu verstärkende Licht bereits eine hohe Intensität aufweist, d. h. wenn eine grosse mittlere Rate von Photonen das verstärkende Medium passiert und die Dichte angeregter Atome infolge einer hohen Rate stimulierter Emissionen von zusätzlichen Photonen niedrig ist.

Jedes durch ein Pumplicht - Photon angeregte Atom wird bereits nach im Mittel kurzer Zeit durch ein Photon des zu verstärkenden Lichts in den Grundzustand versetzt. Bei verhältnismässig langer mittlerer Lebensdauer der angeregten Atome besteht eine verhältnismässig geringe Wahrscheinlichkeit eines spontanen und somit nutzlosen Übergangs in den Grundzustand, wodurch der Wirkungsgrad bei geringer Verstärkung hoch ist.

Um eine hohe Verstärkung bei gleichzeitig hoher Rate stimulierter Übergänge in den Grundzustand zu erzielen, muss trotz niedriger Dichte angeregter Atome innerhalb des verstärkenden Mediums eine hohe mittlere Zahl zusätzlicher, durch stimulierte Übergänge angeregter Atome in den Grundzustand erzeugter Photonen gewährleistet sein. Dies wird meistens dadurch erzielt, dass das zu verstärkende Licht auf möglichst vielen Wegen durch die durch Pumplicht bestrahlte Zone eines verstärkenden Mediums geleitet wird. Hierdurch besteht bei jeweils konstanter Volumendichte angereger Atome für jedes eingekoppelte Photon des zu verstärkenden Lichts ein der Anzahl der Durchgänge entsprechendes Vielfaches der Wahrscheinlichkeit eines einzelnen Durchgangs, zusätzliche Photonen zu generieren.

Trotz niedriger Pumpleistung kann somit ein erstaunlicher Verstärkungsfaktor erzielt werden. Allerdings sind die dem Stand der Technik entsprechenden Vorrichtungen aus mehreren viel Raum und Masse beanspruchenden Elementen aufgebaut, die dadurch Raumfahrt - spezifischen Anforderungen nur schlecht genügen. Auch spezielle Entwicklungen bergen das Risiko ungenügender mechanischer Belastbarkeit (T. J. Kane, E. A. P. Cheng, B. Nguyen, Diode - pumped ND:YAG amplifier with 52 - dB gain, SPIE vol. 2381, Free-space laser communication technologies VII, 7-8 Febr, 1995, San Jose, California, p. 273 - 284; T. E. Olson, T. J. Kane, W. M. Grossmann, H. Plaessmann, Multipass diode - pumped ND:YAG optical amplifiers at 1.06 mu m and 1.32 mu m, Optics Letters, Vol. 6, No. 5, May 1994, p. 605 - 608).

Ein zusätzliches Problem für Raumfahrt-Anwendungen besteht darin, dass auch die zur Erzeugung des Pumplichts verwendeten Diodenlaser eine begrenzte Lebensdauer aufweisen. Folglich ist es notwendig, für jeden Diodenlaser - gepumpten Festkörperlaser und jeden Diodenlaser - gepumpten optischen Verstärker mehrere Diodenlaser in Redundanz bereitzuhalten, um Ausfälle ersetzen zu können.

Folglich ist es Aufgabe der im folgenden beschriebenen Erfindung, die Nachteile des Standes der Technik zu vermeiden und die Erzeugung ausreichender modulierter sowie unmodulierter Lichtleistung durch Laser für den Betrieb eines optischen Terminals gewährleisten.

Die Erfindung betrifft ein Verfahren zum Betreiben mehrerer Laser zwecks Bereitstellung von moduliertem und unmoduliertem Laserlicht zur optischen Nachrichtenübertragung über ein optisches Terminal sowie hierzu erforderliche Anwendungen gemäss Merkmalen der Ansprüche **1** und **2**.

Unmoduliertes Licht zum Betrieb eines optischen Homodyn-Empfängers wird in einem abgesetzten Neodym-YAG-Laser erzeugt, durch einen optischen Isolator geführt, welcher die Eigenschaft besitzt, reflektiertes Licht, das sich in entgegengesetzter Richtung durch den Isolator ausbreitet, wegzudämpfen und damit Rückwirkungen auf den Laser zu vermeiden, welche die Stetigkeit seiner Lichtleistung sowie die Stabilität der optischen Frequenz seiner Emission beeinträchtigen. Anschliessend wird das Licht über eine polarisationserhaltende Einmodenfaser dem eigentlichen Empfänger zugeführt. Ebenso wird das Licht eines mit niedriger optischer Leistung arbeitenden Diodenlaser-gepumpten Neodym-YAG-Lasers nach Passieren eines Isolators in einen Wellenleiter-Modulator gekoppelt, um mit einem breitbandigen Nachrichtensignal in seiner Phase moduliert zu werden. Anschliessend erfolgt die optische Nachverstärkung des modulierten Signals, welche entweder in einem Diodenlaser-gepumpten Verstärker oder in einer dotierten optischen Faser geschieht. Die optische Faser besteht aus Glas und ist mit Neodym dotiert, in Abweichung von den gängigen Erbium dotierten Fasern. Ausserdem geschieht eine automatische Einstellung der Polarisation des verstärkt die nicht polarisationserhaltende Faser verlassenden Lichts. Der Diodenlaser - gepumpte Verstärker besteht aus einem Neodym-YAG-Kristall, dessen Volumen entlang zweier Strahlen von Diodenlasem mit Pumplicht durchflutet wird. Das zu verstärkende Licht wird derart in den Kristall eingekoppelt, dass es durch die Reflexion an mehreren polarisationselektiven und reflektierenden Schichten, welche entweder auf den Seitenflächen des Kristalls direkt angebracht sind oder sich auf vom Kristall abgewandten Seiten von Viertelwellenplatten befinden, die jeweils in unmittelbarer Nähe einer Fläche des Kristalls angeordnet sind, sich entlang der vom Pumplicht durchfluteten strahlenförmigen Zonen mehrfach durch den Kristall bewegt, bevor es den Kristall verstärkt verlässt.

Die erfindungsgemässe Vorrichtung zeichnet sich zusätzlich dadurch aus, dass zur Trennung der zueinander gegenläufigen sich in den Kristall hinein sowie herausbewegenden Lichtstrahlen kein schwerer sogenannter Faraday-Rotator in Verbindung mit einem zusätzlichen Polarisationsstrahlteiler erforderlich ist, da durch einen in unmittelbarer Nähe einer Fläche des Kristalls angebrachter Spiegel zur Reflexion des zu verstärkenden Lichts in einem geringen Winkel zum senkrecht einfallenden zu verstärkendem Lichtstrahl gestellt ist, so dass der aus den Kristall wieder austretende Lichtstrahl gegenüber dem eintretenden Lichtstrahl zu einem geringen Masse seitlich versetzt ist, wobei die seitliche Versetzung geringer ist als der Durchmesser der Lichtstrahlen. Durch einen spitzen Winkel mit geringem Betrag, in welchem die beiden Strahlen wegen der schrägen Reflexion des an einer Fläche des Kristalls angebrachten, schräg reflektierenden Spiegels zueinander stehen, kann in einem gewissen Abstand von der entsprechenden Fläche des Kristalls durch einen Spiegel die Trennung der nun knapp nebeneinander laufenden Strahlen durchgeführt werden.

Eine Weiterbildung dieses Konzeptes beinhaltet ein verstärkendes Medium, das aus zwei durch eine polarisationsselektive Schicht getrennten Kristallen besteht, wodurch das zu verstärkende Licht die von Pumplicht durchfluteten Zonen eines Kristalls 8-fach, sowie des anderen Kristalls 4-fach durchläuft. Hierbei werden zwei Viertelwellenplatten verwendet, wobei eine der beiden Viertelwellenplatten einen einfallenden Lichtstrahl nicht in sich selbst reflektiert, sondern um einen kleinen Winkel ablenkt, wodurch der aus den Kristallen auslaufende Lichtstrahl ebenfalls lediglich mit einem Spiegel von dem einfallenden Lichtstrahl getrennt werden kann.

Beide Neodym-YAG-Verstärker werden durch Diodenlaser mit Pumplicht versorgt. Das Pumplicht kann von mehreren redundant vorhandenen Diodenlasern in eine mehrmodige optische Faser geführt werden, deren Ausgang dann über eine strahlformende Optik in das Kristall eines Verstärkers führt. Wird das bei einer Wellenlänge von 809 nm erzeugte Licht der Diodenlaser auch zum Betrieb eines optischen Bakensenders benutzt, welcher eine wesentlich grössere Lichtleistung aufzuweisen hat, als der für die eigentliche Kommunikation verwendete optische Sender, dafür aber in einen grösseren Winkelbereich ein unmoduliertes Signal abstrahlt und zum Ermöglichen des gegenseitigen Anpeilens bei der Verbindungsaufnahme zweier Terminals dient, kann das zum Betrieb des Bakensenders erforderliche durch Diodenlaser erzeugte Licht, nachdem die Stationen sich aufeinander eingepeilt haben, in einen im optischen Sender befindlichen Neodym-YAG-Verstärker umgeleitet werden. Die Umleitung kann in einfacher und zuverlässiger Weise durch Umschalten eines elektromechanischen faseroptischen Umschalters erfolgen.

Ein weiteres Konzept zur redundanten Bereitstellung mehrerer Diodenlaser beinhaltet die Montage und den getrennten Abgleich mehrerer Diodenlaser auf einer optischen Bank, wobei die kollimierten Strahlen der Diodenlaser durch Polarisationsstrahlteiler auf eine die Strahlen in den Kristall fokussierende Optik geführt werden. Jeder Diodenlaser wird durch einen Polarisationsstrahlteiler aus einer linear angeordneten Reihe von Polarisationsstrahlteilern in Richtung des am Ende der Reihe angeordneten Kristalls reflektiert, wobei die restlichen auf dem Weg zum Kristall zu passierenden Polarisationsstrahlteiler den kollimierten Strahl des betreffenden Diodenlasers nicht mehr reflektieren dürfen. Erreicht wird dies durch Einfügen einer sogenannten Halbwellenplatte zwischen den ersten beiden vom kollimierten Strahl des entsprechenden Diodenlasers durchstrahlten Polarisationsstrahlteilern, wodurch der vom ersten durchstrahlten Polarisationsstrahlteiler reflektierte Lichtstrahl den folgenden und alle weiteren auf seinem Weg befindlichen Polarisationsstrahlteiler ohne reflektiert zu werden durchstrahlen kann, da die dazwischen befindliche Halbwellenplatte die Polarisation des Lichtstrahls um 90 Grad gedreht hat.

In der Publikation "Performance of Diode-Pumped ND: YAG and ND: YLF LAsers in a Thightly Folded Resonator", T.M. Baer et al., IEEE Journal of Quantum Electronics, Band 28, Nr. 4, 1. April 1992, Seiten 1131 - 1138, wird ein Dioden gepumpter Laser beschrieben. Desweiteren wird ein Testaufbau erwähnt, der zum Testen der physikalischen Eigenschaften des gepumpten Lasers ausgelegt ist. Innerhalb dieses Testaufbaus erfährt das vom Laser (TFR Probe Laser) erzeugte Licht eine optische Verstärkung durch den "Diode Bar" in Kombination mit einem Nd: YLF Bauteil als aktives Medium. Vor dieser Verstärkung wird die Lichtwelle in einem Mach-Zehnder Interferometer. Die amplitudenmodulierte und verstärkte Lichtwelle wird dann diversen Messgeräten zugeführt.

R.T. Carlson et al. beschreiben in "Monolithic glass block lasercom terminal: Hardware proof of concept and test results", Free-Space Laser Communication Technologies VII, San Jose, CA, USA, 7 - 8. Februar 1995, Bd. 2381, ISSN 0277-786X, Proceedings of the SPIE - The International Society for Optical Engineering, 1995, SPIE-INT. SOC. OPT. ENG., USA, Seiten 90-102, ein optisches Terminal, das für den Einsatz im Weltraum ausgelegt ist. Das gezeigte System besteht aus Lasem, optischen Elementen, Empfängern, Kontrollelektronik und einer Präzisonspositionierungseinheit. Um einen für den Weltraumeinsatz geeigneten Aufbau zu erzielen, wird ein monolithischer Glassblock (MGB) verwendet, der einen Grossteil der verschiedenen Element trägt.

Ein weiteres optisches Terminal ist in dem folgenden Dokument beschrieben: "Lightweight. high-data-rate communications terminal for low-Earth-orbit satellite constellations", Free-Space Laser Communication Technologies VII, San Jose, CA, USA, 7 - 8. Februar 1995, Bd. 2381, ISSN 0277-786X, Proceedings of the SPIE - The International Society for Optical Engineering, 1995, SPIE-INT, SOC. OPT. ENG., USA, Seiten 72 - 82. Das in diesem Dokument gezeigt Terminal ist für die bidirektionale Kommunikation zwischen Satelliten ausgelegt. Die Komplexität des Terminals wurde durch die Verwendung von verfügbaren Standardkomponenten reduziert. Unter anderem ist die Verwendung eines Spiegels (Beamsplitter) gezeigt, der zur Trennung eines bidirektionalen Lichtstrahles eingesetzt wird. Dies ist notwendig, da die empfangen Lichtstrahl von dem gesendeten Lichtstrahl getrennt verarbeitet werden müssen.

Das erfindungsgemässe Verfahren zur Erzeugung von moduliertem und unmoduliertem Laserlicht beinhaltet den Vorteil, die Erzeugung und Modulation grosser Lichtleistungen mittels Diodenlaser-gepumpter Neodym-YAG-Laser zu ermöglichen, ohne die dabei entstehende Abwärme in der Nähe von optischen Einheiten freizusetzen, welche hierdurch in ihrer Funktionsfähigkeit beeinträchtigt werden würden. Bei Verwendung eines auf einer optischen Einheit montierten Diodenlaser-gepumpten Verstärkers kann die benötigte Pumpleistung durch Mehrmodenfasern in den Kristall des Verstärkers geleitet werden, wodurch die hauptsächlich in den Diodenlasern freiwerdende Wärme an einem abgesetzten Ort erzeugt wird.

Ein vorteilhaftes Merkmal der für dieses Verfahren verwendeten Vorrichtung zur Heranführung der für den Verstärker benötigten Pumpleistung durch optische Mehrmodenfasern besteht darin, dass dieses Licht durch Umleitung in einem elektromechanischen faseroptischen Umschalter auch zum Betrieb eines optischen Bakensenders verwendet werden kann.

Der weitere Vorteil der vielfach redundanten Anordnung von Diodenlasern zur Erzeugung von Pumplicht auf einer optischen Bank in Verbindung mit Polarisationsstrahlteilern besteht in der Unempfindlichkeit von Halbwellenplatten als einzigen zu bewegenden Teilen beim

Umschalten auf den Lichtstrahl eines anderen Diodenlasers, da diese Teile als planparallele Platten keine Brechkraft oder Beugungsfähigkeit haben, sondern bei nicht genauer Ausrichtung im Lichtstrahl diesen lediglich um ein geringes Mass seitlich versetzten.
Zusätzlich Vorteile der Vorrichtungen zur Verstärkung eines Lichtstrahls in einem Diodenlaser-gepumpten Neodym-YAG-Kristall liegen im mehrfachen Durchgang der mit Pumplicht durchfluteten Regionen des gewinnerzeugenden Mediums innerhalb des Kristalls selbst, wobei auf den in üblichen nach demselben Prinzip des mehrfachen Durchgangs arbeitenden optischen Verstärkern betriebenen Aufwand wie z. B. abbildende Optiken verzichtet werden kann, wodurch sich geringe Baugrösse, niedriges Gewicht und erhöhte Unempfindlichkeit gegen starke Beschleunigungen ergeben.

Weitere Einzelheiten, Merkmale und Vorteile der Erfindung ergeben sich nicht nur aus den Ansprüchen und diesen zu entnehmenden Merkmalen -für sich und/oder in Kombination, sondern auch aus der nachfolgenden Beschreibung eines bevorzugten Ausführungsbeispiels.

Es zeigen:
- **Fig.1**: Ein Flussdiagramm eines Verfahrens zur Erzeugung von in einem Lichtwellenleiter geführtem unmoduliertem Laserlicht,
- **Fig. 2**: ein Flussdiagramm eines Verfahrens zur Erzeugung von in einem Lichtwellenleiter geführtem moduliertem Laserlicht.
- **Fig. 3**: ein Flussdiagramm eines Verfahren zur Erzeugung von optisch verstärktem moduliertem Laserlicht in einem kollimierten Strahl.
- **Fig. 4**: ein Schema eines Diodenlaser-gepumpten Festkörperlasers.
- **Fig. 5**: ein Schema einer Vorrichtung zur Multiplexierung der Emission mehrerer Laserdioden.
- **Fig. 6**: die Darstellung der Einkopplung der Emission mehrerer Diodenlaser in einen Mehrmoden-Lichtwellenleiter
- **Fig. 7**: einen elektrooptischen Wanderwellen-Phasenmodulator.
- **Fig. 8**: einen Diodenlaser mit nachgesetztem optischen Halbleiterverstärker.
- **Fig. 9**: einen faseroptischen Verstärker.
- **Fig. 10**: einen Diodenlaser-gepumpten optischen Festkörperverstärker.
- **Fig. 11**: einen Diodenlaser-gepumpten optischen Festkörperverstärker ohne optischen Isolator.
- **Fig. 12**: einen Diodenlaser-gepumpten optischen Festkörperverstärker ohne optischen Isolator mit zusätzlichen Ausbreitungswegen im gewinnerzeugenden Medium.

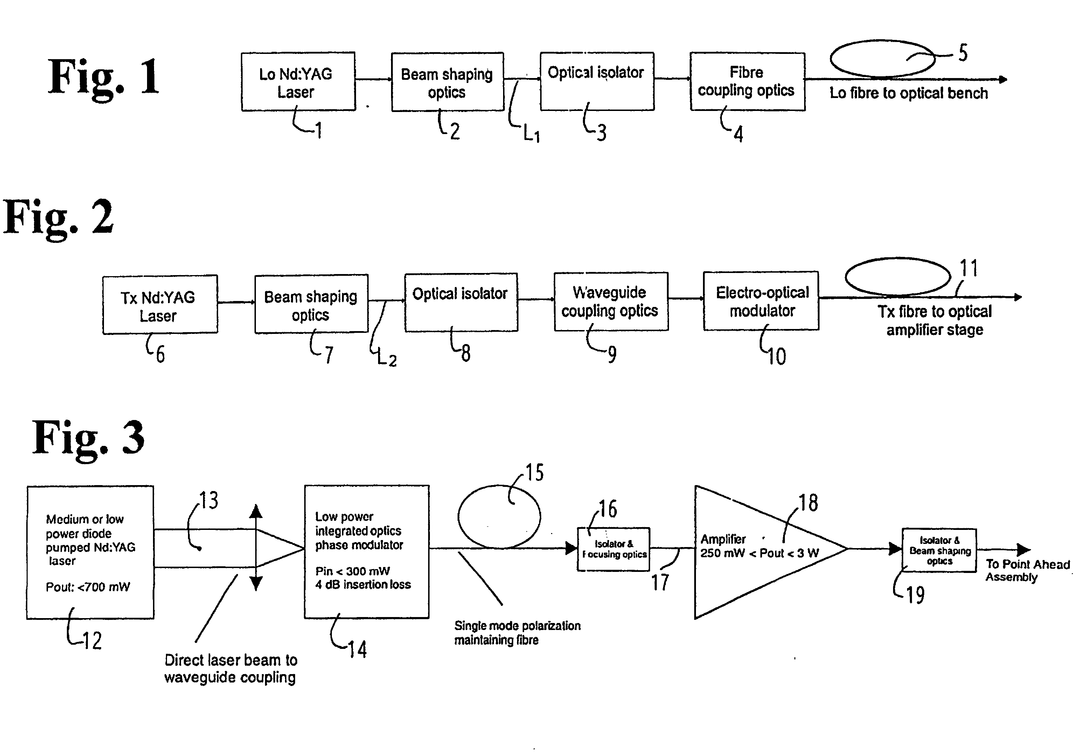

In **Fig. 1** ist in einem Flussdiagramm die Erzeugung unmodulierten Laserlichts dargestellt. Das von einem Laser **1** emittierte Licht wird dabei von einer strahlformenden Optik **2** in einen kollimierten Strahl **L**_{**1**} transformiert, der auf eine senkrecht zu seiner Ausbreitungsrichtung angeordneten Projektionsfläche einen runden Fleck erzeugt. Dieser Strahl wird durch einen optischen Isolator **3** geführt, der die Eigenschaft besitzt, Licht nur in eine Richtung passieren zu lassen, so dass kein reflektiertes Licht in den Laser **1** zurückgeführt werden kann, was seine Eigenschaften negativ beeinflussen würde. Eine Ankoppelungsoptik **4** führt den Strahl in eine polarisationserhaltende optische Einmodenfaser **5**, die zu einem kohärenten optischen Empfänger gelegt ist.

**Fig. 2** zeigt in einem Flussdiagramm eine ähnliche Anordnung zur Erzeugung modulierten Lichts. Ein zweiter Laser **6** emittiert Licht **L**_{**2**} auf eine zweite strahlformende Optik **7,** anschliessend folgt ein zweiter optischer Isolator **8** und eine zweite Ankoppelungsoptik **9,** die den Lichtstrahl in einen elektrooptischen Wanderwellen-Phasenmodulator **10** schickt. Das phasenmodulierte Licht gelangt direkt vom Wellenleiter des Wanderwellen-Phasenmodulators **10** in eine polarisationserhaltende optische Einmodenfaser **11,** die in einer optischen Sendeeinrichtung endet.

**Fig. 3** zeigt als Variante des in **Fig. 2** dargestellten, das Prinzip des erfindungsgemässen Verfahrens, wobei das modulierte Licht in einem optischen Verstärker auf eine höhere Leistung gebracht wird. Unmoduliertes Laserlicht aus einem dritten Laser **12** wird durch eine polarisationserhaltende optische Einmodenfaser **13** auf einen dritten elektrooptischen Wanderwellen-Phasenmodulator **14** geführt und anschliessend über eine polarisationserhaltende optische Einmodenfaser **15** auf eine aus einem optischen Isolator und einer fokussierenden Optik bestehenden Einheit **16** geführt, die das Licht der polarisationserhaltenden optischen Einmodenfaser **15** in einen kollimierten Strahl **17** umsetzt, welcher in das Kristall eines optischen Verstärkers **18** gelangt. Anschliessend gelangt der Strahl **17** auf eine weitere einen optischen Isolator und eine strahlformende Optik umfassende Einheit **19**, um schliesslich durch eine Sendeoptik des optischen Terminals abgestrahlt zu werden.

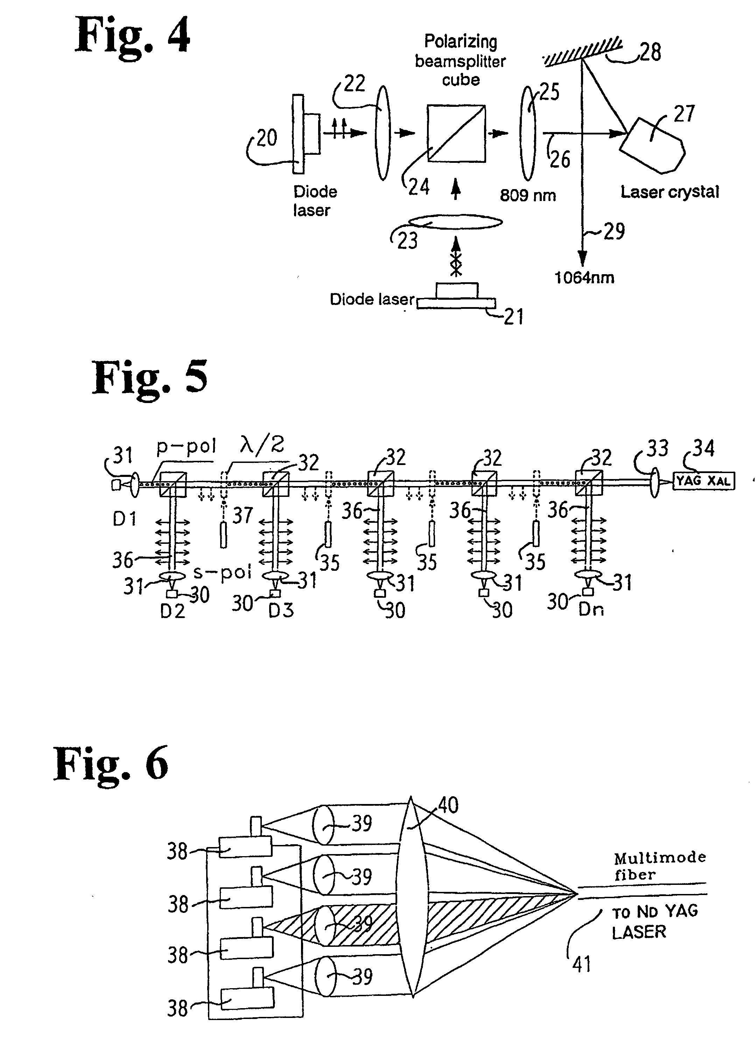

In **Fig. 4** ist eine mögliche Realisierung der bei den durch die **Fig. 1, 2** und **3** beschriebenen Verfahren verwendeten Laser **1**, **6** und **12** beschrieben. Ein Diodenlaser **20** und ein zweiter Diodenlaser **21** strahlen zueinander orthogonal polarisiert durch je eine erste Linse **22** und eine zweite Linse **23** auf einen Polarisationsstrahlteiler **24**. Die auf diese Weise zu einem Strahl zusammengeführten Lichtstrahlen werden mit einer dritten Linse **25** in einen Strahl **26** übergeführt, der auf einen Laserkristall **27** gerichtet ist. Im Laserkristall **27** wirkt der Strahl **26** als Pumplichtquelle für eine Lichtschwingung, die als Lichtstrahl **29** teilweise aus den als Resonator ausgeführten Kristall **27** über einen Spiegel **28** ausgekoppelt wird.
Als Besonderheit ist die Anordnung zweier Diodenlaser **20** und **21** zu erwähnen, die durch den Polarisationsstrahlteiler **24** unabhängig voneinander in den Laserkristall **27** geführt werden und daher als zueinander redundant wirken.

Eine Erhöhung der Redundanz für die relativ unzuverlässigen Diodenlaser ist in **Fig. 5** dargestellt. Ein aus mehreren Diodenlasem **30** bestehender Satz ist über Linsen **31** und Polarisationsstrahlteiler **32** sowie eine Linse **33** an einen Laserkristall **34** angekoppelt. Die Polarisationsstrahlteiler **32** besitzen die Eigenschaft, an ihrer in **Fig. 5** durch einen schrägen Strich angedeuteten Grenzfläche einen horizontal polarisierten Lichtstrahl **36** zu reflektieren, hingegen aber einen vertikal polarisierten Lichtstrahl **37** passieren zu lassen. Zwischen jeweils zwei Polarisationsstrahlteiler **32** kann somit jeweils eine Halbwellenplatte **35** geschoben werden, die die Richtung der Ausbreitung des Lichtstrahls **37** nicht beeinträchtigt, aber die Richtung seiner Polarisation um **90** Grad dreht. Auf diese Weise kann ein vertikal polarisierter Lichtstrahl **37** aus einem horizontal polarisierten Lichtstrahl **36** hervorgehen, der an der Grenzfläche eines Polarisationsstrahlteilers **32** in Richtung des vertikal polarisierten Lichtstrahls **37** reflektiert und in der Richtung seiner Polarisation durch eine dazwischengeschobene Halbwellenplatte **35** angepasst wird. Der am linken Ende der in **Fig. 5** skizzierten Vorrichtung angebrachte Diodenlaser **30** strahlt vertikal polarisiert in den ihm nächstgelegenen Polarisationsstrahlteiler **32**. Prinzipiell lässt sich mit der Vorrichtung jeweils die Emission eines Diodenlasers **30** in den Laserkristall **34** führen. Die Lichtstrahlen aller Diodenlaser **30** werden vor Inbetriebnahme der Vorrichtung nacheinander auf das Laserkristall **34** fokussiert, indem der jeweilige Diodenlaser **30** in Betrieb genommen wird und diejenige Halbwellenplatte **35**, welche rechts neben dem jeweils zuerst durchstrahlten Polarisationsstrahlteiler **32** liegt, in den Strahlengang geschoben wird. Der Abgleich erfolgt dann durch die Bewegung der jeweiligen Linse **31**. Im Betrieb der Vorrichtung kann dann ein beliebiger Laser **30** eingeschaltet werden und sein Lichtstrahl durch Einschieben der entsprechenden Halbwelleplatte **35** auf den Laserkristall **34** gerichtet werden. Da die Halbwellenplatten **35** planparallel ausgeführt sind, erfolgt keine Beugung des in seiner Polarisation zu drehenden Lichtstrahls, nicht exakt rechtwinklig zum Lichstrahl stehende Halbwellenplatten **35** verursachen lediglich eine geringe Parallelversetzung des Lichtstrahls **37**.

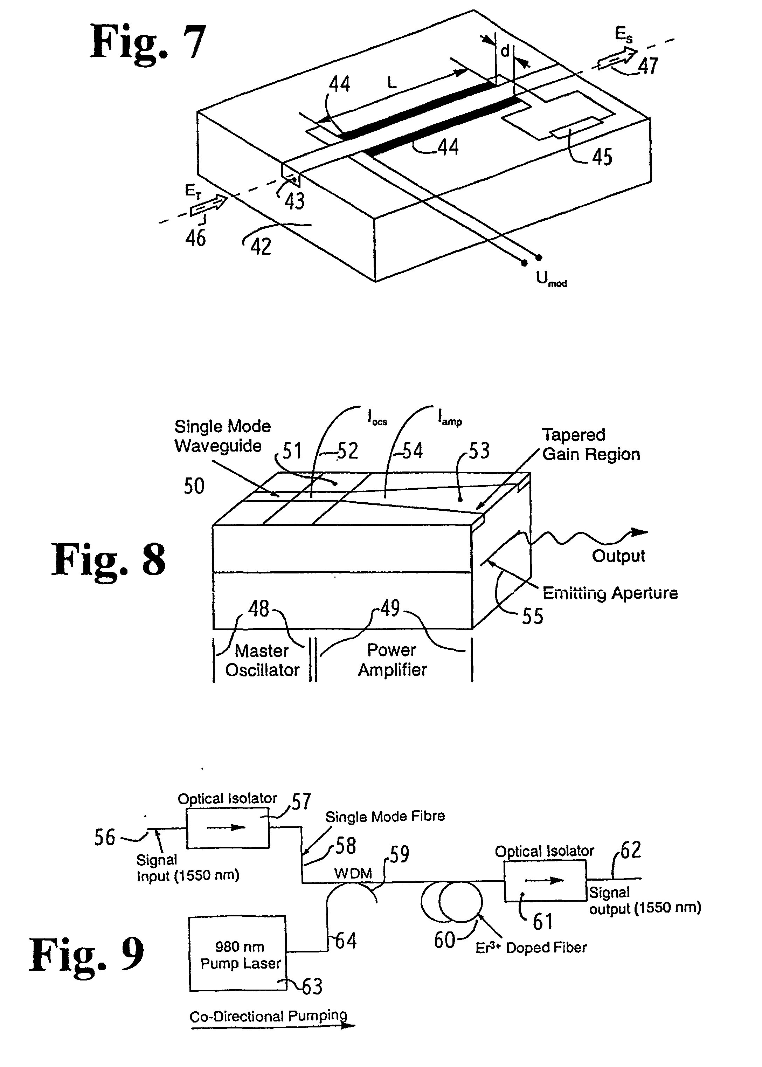

Als Alternative besteht die Möglichkeit, das Licht von Diodenlasern über einen mehrmodigen Lichtwellenleiter weiterzuführen. In **Fig. 6** ist schematisch dargestellt, wie die Emission von Diodenlasem **38** durch Linsen **39** in kollimierte Strahlen übergeführt und durch eine Linse **40** in eine Mehrmodenfaser **41** gekoppelt wird. Die Mehrmodenfaser **41** transportiert Licht in einer grossen Zahl sogenannter Moden, die alle am Ausgang der Faser einen unterschiedlichen Verlauf der Lichtintensität über die Querschnitssfläche der Faser verursachen. Allerdings wird in der Mehrmodenfaser **41** Lichtleistung zwischen allen Moden übergekoppelt, so dass nach einer kurzen Faserstrecke alle Moden etwa gleich viel Lichtleistung transportieren. Deshalb können verschiedene Diodenlaser **38** einzeln betrieben werden, wobei jeder Diodenlaser **38** sein Licht am Anfang der Mehrmodenfaser **41** in unterschiedliche Moden koppelt. Da sich die Lichtleistung im Verlauf der Mehrmmodenfaser **41** auf alle Moden gleichverteilt, ändert sich auch nicht der Verlauf der Lichtintensität über die Querschnitssfläche der Faser in Abhängigkeit von den am Eingang der Mehrmodenfaser **41** betreibenen Diodenlaser. Dadurch kann ebenfalls mehrfache Redundanz von Diodenlasern gewährleistet werden.

**Fig. 7** zeigt einen Wanderwellen-Phasenmodulator, durch den es möglich ist, eine Lichtwelle niedriger optischer Leistung mit niedriger Modulationsspannung bei hoher Grenzfrequenz phasenzumodulieren. Die Vorrichtung besteht aus einem Lithium-Niobat-Block **42**, in welchem ein rechteckiger Kanal **43** durch Dotierung eine geringfügig höhere Brechzahl als das ihn umgebende Material aufweist. Der dadurch erzeugte optische Wellenleiter ist von zwei auf der Oberfläche des Lithium-Niobat-Blocks **42** angebrachten Elektroden **44** umgeben. Beide Elektroden **44** bilden eine Hochfrequenz-Wellenleitung, die mit einem dem Wellenwiderstand dieser Hochfrequenzleitung entsprechenden Widerstand **45** reflexionsfrei abgeschlossen ist. Es wird angestrebt, dass die am nicht mit dem Widerstand **45** verbundenen Ende der paarweise angeordneten Elektroden **44** eingespeiste hochfrequente Modulationsspannung U_{mod} sich mit gleicher Phasengeschwindigkeit bewegt wie eine in gleicher Richtung in den rechteckigen Kanal **43** eingekoppelte Lichtwelle **46,** wodurch die Modulationsspannung während der Laufzeit entlang der Länge L der Elektroden **44** auf das Lichtfeld einwirken kann, das dadurch in eine phasenmodulierte Lichtwelle **47** übergeführt wird.

In **Fig. 8** wird eine Konfiguration aus einem Diodenlaser **48** und einem optischen Halbleiterverstärker **49** dargestellt. Die Lichtwelle des Diodenlasers **48** wird in einer gewinnerzeugenden Region **51** erzeugt, die einen Halbleiterübergang aufweist, der mit einem Strom **52** gespeist wird. Ein sich linksseitig anschliessender einmodiger Wellenleiter **50** enthält eine zur Gewährleistung der Emission von lediglich einer optischen Frequenz nötige Struktur. Der sich rechtsseitig an den Diodenlaser **48** anschliessende optische Halbleiterverstärker **49** ist in einer exponentiell sich in Ausbreitungsrichtung des zu verstärkenden Lichts aufweitenden gewinnbringenden Struktur **53** ausgeführt, die mit einem Speisestrom **54** versorgt, konstante optische Leistungsdichte entlang eines ebenfalls exponential sich weitenden optischen Wellenleiters gewährleistet, dessen Ausgang **55** einen allerdings stark astigmatischen verstärkten Lichtstrahl abstrahlt.

Eine weitere Möglichkeit zur Verstärkung einer Lichtwelle innerhalb eines optischen Wellenleiters ist in **Fig. 9** gezeigt. Eine in einer Einmodenfaser geführte Lichtwelle **56** wird durch einen optischen Isolator **57** geführt, der die Eigenschaft besitzt, Licht nur in einer Richtung zwischen seinen beiden Anschlüssen hindurchzulassen. Licht in der Gegenrichtung wird weggedämpft. Anschliessend wird die Lichtwelle **56** durch eine Einmodenfaser **58** auf einen Wellenlängen-Multiplexer **59** geführt, der aus zwei in geringem Abstand zueinander angeordneten Wellenleitern besteht. Licht bestimmter Wellenlängen kann während der Passage einer der parallel zueinander angeordneten Wellenleiter auf den benachbarten Wellenleiter überwechseln. Die Lichtwelle **56** bleibt auf ihrem Wellenleiter, eine in einer Pumplichtquelle **63** und über eine weitere Einmodenfaser **64** dem zweiten Wellenleiter des Wellenlängen-Multiplexers **59** zugeführte Pumplichtwelle wechselt auf den Wellenleiter der Lichtwelle **56** über und dient dazu, die in den Kern der Einmodenfaser **60** eingebrachten Erbium-Ionen in einen angeregten Zustand zu versetzten, welche genau dann wieder unter Abgabe eines Photons der Wellenlänge der Lichtwelle **56** in einen nichtangeregten Zustand zurückfallen, wenn sie von Photonen der Wellenlänge der Lichtwelle **56** getroffen werden. Die auf diese Weise erzielte Vermehrung von Photonen der Wellenlänge der Lichtwelle **56** stellt die erzielte optische Verstärkung der Lichtwelle **56** dar. Anschliessend wird die Lichtwelle **56** durch einen weiteren Isolator **61** geführt, um an dessen Ausgang als verstärkte Lichtwelle **62** zur Verfügung zu stehen. Beide optische Isolatoren **57** und **61** dienen dazu, die Ausbildung einer Laserkavität mit ausserhalb des Verstärkers befindlichen Reflexionsstellen zu vermeiden, um die Neigung zu optischen Eigenschwingungen zu unterdrücken.

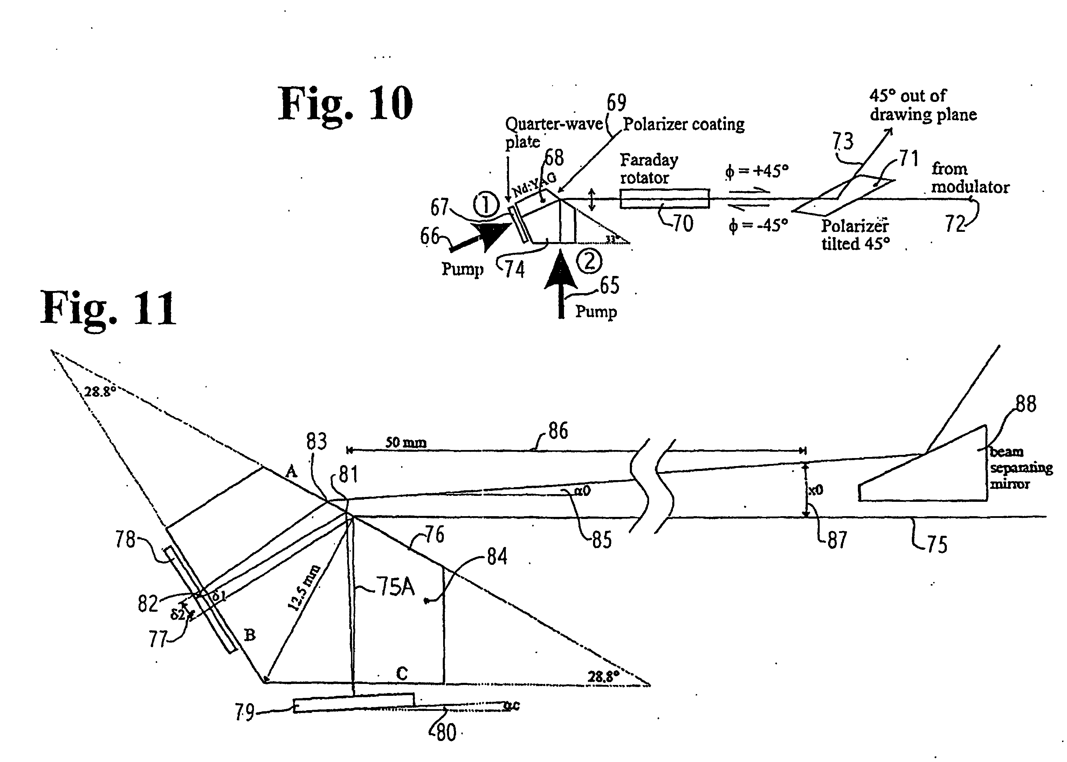

Ein durch Diodenlaser gepumpter optischer Festkörper-Verstärker ist in **Fig. 10** dargestellt. Der zu verstärkende Lichtstrahl **72** trifft zunächst auf einen Polarisationsstrahlteiler **71** in einer Polarisation, mit welcher der Lichtstrahl 72 den Polarisationsstrahlteiler **71** passieren kann, ohne in eine andere Richtung reflektiert zu werden. Anschliessend passiert der Lichtstrahl **72** einen Faraday-Rotator **70**, in welchem der Lichtstrahl **72** in seiner Polarisation um 45 Grad gedreht wird. Im Faraday- Rotator **70** geschieht dies dadurch, dass das elektrische Feld der Lichtstrahl **72** an Atome eines durch den Lichtstrahl **72** durchstrahlten Mediums gebundene Ladungsträger unter Einfluss eines in Richtung der Ausbreitung der Lichtstrahl **72** vorhandenen statischen Magnetfeldes mit der Frequenz der Lichtstrahl **72** bewegt. Die Bewegung der Ladungsträger erzeugt wiederum eine ein Feld erzeugende Polarisation, wobei nach Lorenz durch das statische Magnetfeld eine zum treibenden elektrischen Lichtfeld senkrechte Ablenkungskomponente entsteht. Hierdurch wird beim Durchgang der Lichtstrahl durch das Medium allmählich eine Polarisationsdrehung erzeugt. Die in ihrer Polarisation um 45 Grad gedrehte Lichtstrahl **72** trifft anschliessend auf eine polarisationsselektive Beschichtung **69** eines Neodym-YAG-Kristalls **68,** und wird in Richtung einer in unmittelbarer Nähe einer Fläche des Neodym-YAG-Kristalls **68** befindlichen Viertelwellenplatte **67** gebeugt. Die Viertelwellenplatte **67** ist derart angeordnet, dass der noch linear polarisierte Lichtstrahl **72** in zwei zueinander orthogonal polarisierte Teilkomponenten zerlegt wird, die beim Durchgang durch die Viertelwellenplatte **67** gegeneinander in ihrer Phase einen Unterschied von 90° Grad aufweisen. Zusammengesetzt entsteht somit eine zirkular polarisierte Lichtwelle, die nach der vollständigen Reflektion an einer an der Aussenseite der Viertelwellenplatte **67** angebrachten dielektrischen Beschichtung die Viertelwellenplatte **67** ein weiteres Mal in der Gegenrichtung passiert, wodurch zwischen beiden zueinander orthogonal polarisierten gleichgrossen Komponenten der Lichtstrahl **72** ein Unterschied der Phase von 180 Grad entsteht, wodurch sich der Lichtstrahl **72** wieder zu einer linear, aber orthogonal polarisierten Lichtstrahl zusammensetzt.

Dieser orthogonal polarisierte Lichtstrahl **72** wird an der polarisationsselektiven Beschichtung **69** reflektiert und pflanzt sich zu einer Fläche **74** des Neodym-YAG-Kristalls **68** fort, an der sie vollständig in die Gegenrichtung reflektiert wird. Nach einer nochmaligen Reflexion an der polarisationsselektiven Beschichtung **69** durchläuft die orthogonal polarisierte Lichtstrahl **72** weiteres Mal die Viertelwellenplatte **67**, an deren äusserer Fläche eine vollständige Reflexion erfolgt. Die nun wieder in ihrer ursprünglichen Polarisation vorhandene Lichtstrahl **72** wird von der polarisationsselektiven Beschichtung **69** nicht reflektiert und durchläuft den Faraday-Rotator **70** in Gegenrichtung, wird ein weiteres Mal in ihrer Polarisation um 45 Grad gedreht und dadurch am Polarisationsstrahlteiler **71** in Richtung eines Strahls **73** reflektiert. Auf diese Weise passiert der Lichtstrahl **72** den Neodym-YAG-Kristall **68** also vierfach.

Hierbei erfährt der Lichtstrahl **72** optische Verstärkung dadurch, das die Photonen des Lichtstrahls **72** auf optisch angeregte Atome treffen, die wiederum durch die Photonen des Lichtstrahls **72** stimuliert ihrerseits beim Übergang in einen nicht angeregten Zustand Photonen mit derselben Wellenlänge freisetzen. Der angeregte Zustand der entsprechenden Atome des Neodym-YAG-Kristalls **68** wird durch die Photonen einer Lichtwelle mit einer bestimmten kürzeren Wellenlänge hergestellt, welche in Pumpstrahlen **65** und **66** in das Kristall geführt werden. Hierbei sind die dielektrischen Beschichtungen der äusseren Fläche der Viertelwellenplatte **67** sowie der Fläche **74** derart ausgeführt, dass sie die Strahlen **65** und **66** im Gegensatz zur Lichtstrahl **72** nicht reflektieren. Trifft der Lichtstrahl **72** auf ein Neodym-YAG-Kristall **68** mit einer hohen Dichte von angeregten Atomen, werden bei schwachem Lichtstrahl **72** wenige Photonen jeweils viele zusätzliche Photonen erzeugen, also um einen hohen Faktor verstärkt werden. Allerdings ist dann die absolute Zahl neu erzeugter Photonen gemessen an der hohen Dichte angeregter Atome im Neodym-YAG-Kristall **68** gering. Da die Atome nach einer gewissen Zeit spontan in den nicht angeregten Zustand zurückkehren, muss mit einer hohen Leistung an Pumplicht für ständigen Ersatz gesorgt werden. Eine hohe Leistung des in das Neodym-YAG-Kristall eintretenden Lichtstrahls **72** bedeutet, dass eine Vielzahl von Photonen auf angeregte Atome trifft, dadurch aber auch die Dichte der angeregten Atome drastisch reduziert und somit die Wahrscheinlichkeit für das einzelne in den Neodym-YAG-Kristall **68** eintretende Photon des Lichtstrahls **72**, eine gewisse Anzahl zusätzlicher Photonen auszulösen, senkt. Nun wird die überwiegende Mehrheit der angeregten Atome nicht mehr spontan, sondern durch andere Photonen stimuliert in den nicht angeregten Zustand übergehen und somit zur Verstärkung genutzte Photonen erzeugen.

Folglich steht eine hohe Verstärkung eines Lichtstrahl **72** im Gegensatz zu einem hohen Wirkungsgrad bezüglich des eingesetzten Pumplichts. Dieser Widerspruch lässt sich teilweise dadurch aufheben, dass einerseits das anregende Pumplicht und der verbrauchende Lichtstrahl **72** sich im Neodym-YAG-Kristall **68** möglichst vollständig überlappen, andererseits aber der Lichtstrahl **72** das die angeregten Atome beherbergende Volumen des Neodym- YAG-Kristalls **68** vielfach durchquert, wie es in der in **Fig. 10** beschriebenen Vorrichtung der Fall ist. Eine Weiterbildung des in **Fig. 10** dargestellten optischen Verstärkers ist in **Fig. 11** beschrieben.

Da nämlich ein Faraday-Rotator (bei 1 µm Wellenlänge) viel Platz und Gewicht beansprucht, ist es günstiger, die Trennung von in die Vorrichtung ein- und aus ihr herauslaufenden Lichtstrahlen durch eine geringfügig schräge Reflexion zu erzielen. Ein zu verstärkender Lichtstrahl **75** tritt durch eine polarisationsselektive Beschichtung **76** in ein Neodym-YAG-Kristall **84,** um nach dessen Durchtaufen an einem Punkt **77** an der Aussenseite einer Viertelwellenplatte **78** reflektiert zu werden, wobei der reflektierte nun in seiner linearen Polarisation um **90** Grad gedrehte Lichstrahl **75** an der polarisationselektiven Beschichtung **76** an seinem ursprünglichen Eintrittsort in das Neodym-YAG-Kristall **84** in Richtung eines in unmittelbarer Nachbarschaft zum Neodym-YAG-Kristall angebrachten Spiegels **79** reflektiert wird. Der Spiegel **79** ist um einen kleinen Winkel **80** gegenüber dem rechten Winkel zum einfallen Lichtstrahl **75** gekippt, wodurch der in seiner Polarisation unveränderte am Spiegel **79** reflektierte Lichtstrahl **75** am Punkt **81** an der polarisationsselektiven Beschichtung **76** in Richtung der Viertelwellenplatte **78** reflektiert wird. Nach einer weiteren Reflexion am einem Punkt **82** an der Aussenseite der Viertelwellenplatte **78** durchtritt der Lichtstrahl **75** an einem Punkt **83** die polarisationsselektive Beschichtung **76**, um sich mit einem Winkel **85** in Bezug auf die Richtung des eintretenden Lichtstrahls **75** fortzupflanzen. Günstigerweise weist die Beschichtung **76** zum einlaufenden Lichtstrahl **75** sowie am am Punkt **83** auslaufenden Lichtstrahl jeweils einen den Wert des Brewsterwinkels nahekommenden Winkel auf. Insbesondere muss die teilweise Reflektion des am Punkt **83** auslaufenden Lichtstrahls In den Neodym-YAG-Kristall **84** minimiert werden. Nach einer Wegstrecke **86** entsteht ein hinreichender seitlicher Abstand **87** zum eintretenden Lichtstrahl **75**, um eine Abtrennung des austretenden Lichtstrahls mit einem schmalen Spiegel **88** vornehmen zu können. Das Pumplicht wird auf den gleichen Wegen wie in **Fig. 10** dargestellt, zugeführt.

Die Aussenseite der Viertelwellenplatte **78** sowie die reflektierende Schicht des Spiegels **79** sind ebenfalls derart beschichtet bzw. ausgeführt, dass Pumplicht nicht reflektiert wird.

In der beschriebenen Vorrichtung nach **Fig. 11** durchquert der Lichtstrahl **75** somit auf 6 Wegen den Neodym-YAG-Kristall **84.**

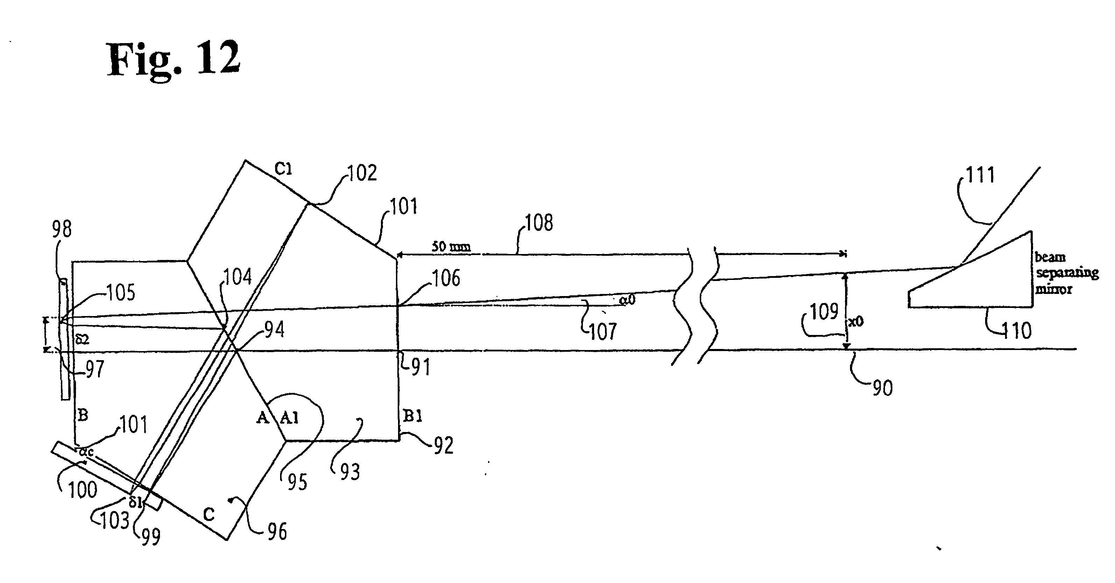

In **Fig. 12** ist eine weitere Vorrichtung mit zweigeteiltem Neodym-YAG-Kristall dargestellt. Ein Lichtstrahl **90** tritt an einem Punkt **91** in einen Neodym-YAG-Kristall **93** ein, um am Punkt **94** auf eine polarisationsselektive Schicht **95** zu treffen, die den geeignet polarisierten Lichtstrahl **90** in ein benachbartes Neodym-YAG-Kristall **96** passieren lässt. Nach Durchlauf einer Viertelwellenplatte **98** und Reflexion in einem Punkt **97** auf der reflektierend beschichteten dem Neodym-YAG-Kristall **96** abgewandten Seite der Viertelwellenplatte **98** wird diese ein zweites Mal durchlaufen, um durch die gegenseitige Phasenverschiebung von 180 Grad zweier orthogonalen Bestandteile eine zur vorherigen orthogonale Polarisation zu erhalten und dadurch im Punkt **94** an der polarisationsselektiven Schicht **95** in Richtung einer zweiten Viertelwellenplatte **100** reflektiert zu werden. Durch einen geringen Winkel **101** der Viertelwellenplatte **100** zum rechten Winkel des vom Punkt **94** her einfallenden Lichtstrahls **90** erfolgt nach infolge einer Reflexion in einem Punkt **99** zweimaligen Durchlauf der Viertelwellenplatte **100** der Durchtritt des abermals in seiner Polarisation gedrehten Lichtstrahls **90** durch die polarisationsselektive Schicht **95** auf einen Punkt **102** einer reflektierenden Schicht **101**. Um die Anordnung zu optimieren ist in aller Regel am Punkt **102** eine weitere (hier aus Übersichtlichkeitsgründen nicht gezeichnete) Pumplichtquelle angeschlossen. Anschliessend durchquert der in seiner Polarisation unveränderte Lichtstrahl **90** nochmals die polarisationsselektive Schicht **95** in Richtung der Viertelwellenplatte **100,** an deren vom Neodym-YAG-Kristall abgewandten Seite er in einem vom Punkt **99** seitlich versetzten Punkt **103** reflektiert wird, um aufgrund des zweimaligen Durchlaufs der Viertelwellenplatte **100** mit um 90 Grad gedrehter Polarisation an der polarisationsselektiven Schicht **95** in einem Punkt **104** in Richtung der Viertelwellenplatte **98** reflektiert zu werden. Nach Reflexion an der Aussenseite der Viertelwellenplatte **98** in einem zum Punkt **97** seitlich versetzten Punkt **105** passiert der Lichtstrahl **90** infolge zweimaligem Durchgangs durch die Viertelwellenplatte **98** in seiner Polarisation wiederum um 90 Grad gedreht die polarisationsselektive Schicht **95** um in einem gegenüber dem Punkt **91** seitlich verstzten Punkt **106** den Neodym-YAG-Kristall **93** zu verlassen. Der Lichtstrahl **90** breitet sich nun in entgegengestzter Richtung und zusätzlich um einen kleinen Winkel **107** verdreht über eine Strecke **108** aus, nach welcher er gegenüber dem Eingang eine hinreichende Distanz **109** erlangt hat, die seine Abtrennung durch einen Spiegel **110** und einem Ausgangsstrahl **111** erlaubt. Pumplicht wird durch die beiden Viertelwellenplatten **98** und **100** hindurch zugeführt, wobei deren dem Neodym-YAG-Kristall **96** abgewandten Seiten das Pumplicht im Gegensatz zum Lichtstrahl **90** nicht reflektieren, sondern passieren lassen. Auch die polarisationsselektive Schicht **95** lässt das Pumplicht unabhängig von seiner Polarisation passieren, wodurch auch der Neodym-YAG-Kristall **93** Pumplicht erhält. Auf diese Weise wird der Neodym-YAG-Kristall **93** auf 4 Wegen durchschritten, der Neodym-YAG-Kristall **96** sogar auf 8 Wegen.

Beim vorstehend Beschriebenen handelt es sich lediglich um Ausführungsbeipiele auf die die Erfindung ausdrücklich nicht beschränkt sein soll, sondern diese sollen u.a. auch Laseranordnungen mit einem gewinnerzeugenden Medium aus Nd:YV0₄ und/oder mit Nd:YLF mit einschliessen.

Insbesondere kann das Verfahren nach Anspruch **1** oder die Anordnung nach einem der Ansprüche **2** bis **10** zusätzlich mindestens eines der folgenden Merkmale aufweisen:
es wird mindestens ein Polarisationsstrahlteiler **32** in Mehrfachausführung verwendet, welcher mit wenigstens einer beweglichen Halbwellenplatte **35** verbunden ist, um wenigstens die Emissionen von drei polarisierten Diodenlasern **30** präzise auf den Festkörperverstärker **34** auszurichten;
im durch Diodenlaser **65, 66** gepumpten optischen Festkörperverstärker **18** wird ein Kristall **68** als verstärkendes Medium benutzt, welcher an seinen Aussenflächen mit einer polarisationsselektiven Beschichtung **69**, reflektiven Schichten **74** sowie einer Viertelwellenplatte **67** versehen ist, um auf diese Weise den mehrfachen Durchgang des zu verstärkenden Lichts durch das gewinnerzeugende Medium **68** zu ermöglichen;
der optisch gepumpte Festkörperverstärker **18** enthält ein gewinnerzeugendes Medium, welches im Rahmen eines Verstärkungszyklusses mehrfach durchlaufen wird;
die Emission des auf einer optischen Frequenz emittierenden Diodenlasers **30** ist wahlweise mit mehreren Diodenlasern **30** verbindbar, bevor sie dem gepumpten optischen Festkörperverstärker **34** zugeführt wird;
die Phasenmodulation wird im Wellenleiter eines Wanderwellen-Phasenmodulators durchgeführt und anschliessend in einer Neodym-dotierten optischen Faser verstärkt ;
die Emission des auf einer optischen Frequenz emittierenden Diodenlasers **38** bezieht Pumplicht über eine mehrmodige optische Faser **41** aus einem auf einer optischen Einheit angeordneten, abgesetzten Ensemble von Diodenlasern **38**;
die Emission des auf einer optischen Frequenz emittierenden Diodenlasers erfolgt wenigstens aus zwei Diodenlasern **20, 21,** die über einen Polarisationsstrahlteiler **24** dem verstärkenden Laserkristall **27** zugeführt werden.

Vorzugsweise ist der als verstärkendes Medium nutzbare Kristall **68** einer Anordnung nach einem der Ansprüche **2** bis **7** ein Neodym-YAG-Kristall.

## Patentansprüche

1. Verfahren zum Betreiben eines Laser-Systems für optische Freiraum-Kommunikation, insbesondere das Erzeugen verstärkten Laserlichts unter Weltraumbedingungen, wobei die Emission eines unmodulierten auf einer optischen Frequenz emittierenden Dioden- oder diodengepumpten Festkörperlasers **(12)** einer Modulation **(14)** unterzogen, anschliessend der kollimierte Strahl **(17)** in einem optisch gepumpten Festkörper-Verstärker **(18)** über eine optische Faser **(18A)** einer strahlformenden Optik **(19)** zugeführt wird,
**dadurch gekennzeichnet, dass**
die Emission in dem elektrooptischen Modulator **(14)** phasenmoduliert wird, um moduliertes Laserlicht zu erzeugen,
der optische Isolator **(16)** das modulierte Laserlicht in Form eines freien kollimierten Strahles **(17)** in den optisch gepumpten Festkörper-Verstärker **(18)**
leitet,
dass der Festkörper-Verstärker **(18)** einen als verstärkendes Medium nutzbaren Kristall **(84)** umfasst, der an seinen Aussenflächen polarisationsselektive und reflektive Schichten aufweist und im Bereich einer Grenzfläche des Kristalls **(84)** eine Viertelwellenplatte **(78)** vorgesehen ist und auf diese Weise das modulierte Laserlicht einen mehrfachen Durchgang durch das gewinnerzeugende Medium **(84)** vollzieht
dass unterhalb einer ersten Austrittsstelle des modulierten Laserlichts **(75)** bei dem Kristall **(84)** zusätzlich ein Spiegel **(79)** vorhanden ist, der um einen kleinen Winkel **(80)** gegenüber dem rechten Winkel zu einem einfallenden Lichtstrahl **(75A)** gekippt ist, um eine Trennung von ein- und auslaufendem moduliertem Laserlicht **(75)** zu ermöglichen.

2. Anordnung zum Erzeugen verstärkten Laserlichts für optische Freiraum-Kommunikation, insbesondere unter Weltraumbedingungen, wobei Mittel zum Erzeugen von unmoduliertem Laserlicht **(12)** mit Mitteln zum polarisationserhaltenden Weiterführen **(13)** des unmodulierten Laserlichtes, mit einem elektrooptischen Modulator **(14)** und mit Mitteln zur Weiterführung des modulierten Laserlichtes **(15)** zu einem optischen Isolator **(16)** verbünden sind,
**dadurch gekennzeichnet, dass**
der elektrooptischen Modulator **(14)** ein Phasenmodulator ist,
der optische Isolator **(16)** das modulierte Laserlicht in Form eines freien kollimierten Strahles **(17)** in den optisch gepumpten Festkörper-Verstärker **(18)** leitet, an den über eine optische Faser **(18A)** ein weiterer optischer Isolator **(19)** mit strahlformender Optik verbunden ist,
dass der Festkörper-Verstärker **(18)** durch Diodenlaser gepumpt ist,
dass der Festkörper-Verstärker **(18)** einen als verstärkendes Medium nutzbaren Kristall **(84)** umfasst, der an seinen Aussenflächen mit polarisationsselektiven und reflektiven Schichten versehen ist,
dass im Bereich einer Grenzfläche des Kristalls **(84)** eine Viertelwellenplatte **(78)** vorhanden ist und auf diese Weise den mehrfachen Durchgang des modulierten Laserlichts durch das gewinnerzeugende Medium **(84)** ermöglicht, und
dass unterhalb einer ersten Austrittsstelle des modulierten Laserlichts **(75)** bei dem Kristall **(84)** zusätzlich ein Spiegel **(79)** vorhanden ist, der um einen kleinen Winkel **(80)** gegenüber dem rechten Winkel zu einem einfallenden Lichtstrahl **(75A)** gekippt ist, der eine Trennung von ein- und auslaufendem moduliertem Laserlicht **(75)** ermöglicht.

3. Anordnung nach Anspruch **2,**
**dadurch gekennzeichnet, dass**
der Polarisationsstrahlteiler (**32**) in Mehrfachausführung vorhanden ist, und
dass dieser mit wenigstens einer beweglichen Halbwellenplatte **(35)** verbunden ist, über die dafür gesorgt ist, dass wenigstens die Emissionen von drei polarisierten Diodenlasem (30) präzise auf den Festkörperverstärker **(34)** ausgerichtet sind.

4. Anordnung nach Anspruch **2** oder **3**,
**dadurch gekennzeichnet, dass**
der durch Diodenlaser **(65, 66)** gepumpte optische Festkörperverstärker **(18)** einen als verstärkendes Medium nutzbaren Kristall **(68)** umfasst, und
dass dieser Kristall **(68)** an seinen Aussenflächen mit einer polarisationsselektiven Beschichtung **(69),** reflektiven Schichten **(74)** sowie einer Viertelwellenplatte **(67)** versehen ist und auf diese Weise den mehrfachen Durchgang des zu verstärkenden Lichts durch das gewinnerzeugende Medium **(68)** bewirkt.

5. Anordnung nach einem der Ansprüche **2** bis **4,**
**dadurch gekennzeichnet, dass**
den Mitteln zum Erzeugen des unmodulierten Laserlichts **(12)** aus zwei orthogonal polarisierten Emissionen zweier Pumplichtquellen (**20**, **21**) ein Polarisationsstrahlteiler (**24**) nachgeschaltet ist, mittels dem dem optisch gepumpten Festkörper-Verstärker (Laserkristall) **(27)** gemeinsam ein einziger Strahl **(26)** zugeführt ist.

6. Anordnung nach einem der Ansprüche **2** bis **5**,
**dadurch gekennzeichnet, dass**
zur individuellen Ausrichtung der Emissionen der Pumplichtquellen **(20, 21, 30)** abgleichbare Linsen **(22, 23, 31)** vorhanden sind.

7. Anordnung nach einem der Ansprüche **2** bis **6,**
**dadurch gekennzeichnet, dass**
der durch Diodenlaser **(65, 66)** gepumpte optische Festkörperverstärker **(18)** einen mehrfach als optischen Isolator **(16, 19)** nutzbare Anordnung **(69, 70, 71),** umfassend einen Faraday-Rotator **(70)**, die polarisationsselektive Beschichtung **(69)** und einen Polarisationsstrahlteiler **(71)**, aufweist.

8. Anordnung nach einem der Ansprüche **4** bis **7,**
**dadurch gekennzeichnet, dass**
unterhalb einer ersten Austrittsstelle des zu verstärkenden Lichtsstrahls **(75)** beim als gewinnerzeugenden Medium nutzbaren Kristall **(84)** zusätzlich ein reflektierender Spiegel **(79)** vorhanden ist, der die Trennung von ein- und auslaufendem, zu verstärkenden Lichtstrahl **(75)**, ohne zusätzlichen Faraday-Rotator und Polarisationsstrahlteiler ermöglicht, wobei der Spiegel (**79**) um einer kleinen Winkel (80) gegenüber den einlaufenden Lichtstrahl gekippt ist.

9. Anordnung nach einem der Ansprüche **4** bis **8**,
**dadurch gekennzeichnet, dass**
das gewinnerzeugende Medium in zwei aneinander gelagerte Kristalle **(93, 96)** aufgeteilt ist, die an jeweils einer Fläche über eine polarisationsselektive Schicht **(95)** miteinander verbunden sind.

10. Anordnung nach einem der Ansprüche **4** bis **9,**
**dadurch gekennzeichnet, dass**
eine Lichtstrahlumlenkung vom einfallenden Lichtstrahl **(90)** durch das gewinnerzeugende Medium der zwei aneinander gelagerten Kristalle (**93, 96**) zum verstärkten Ausgangsstrahl (**111**) von zwei Viertelwellenplatten **(98, 100)** realisiert wird.

## Claims

1. Procedure for operation of a laser system for optical communication in space, in particular the generation of amplified laser light in space conditions, in which the emission from an unmodulated diode or diode-pumped solid-state laser (**12**) emitting on an optical frequency is subjected to modulation (**14**) and the collimated beam (**17**) is then conducted in an optically pumped solid-state amplifier **(18)** via an optical fibre **(18A)** to a beam-shaping optical device **(19),**
**characterized in that**
the emission is phase-modulated in an electro-optical modulator **(14)** in order to generate modulated laser light,
the optical isolator **(16)** conducts the modulated laser light in the form of a free collimated beam **(17)** into the optically pumped solid state amplifier **(18)**,
that the solid-state amplifier **(18)** contains for use as its amplifying medium a crystal **(84)** with polarization-selective and reflective layers on its outer surfaces and provided with a quarter-wave plate **(78)** in the area of one interface of the crystal **(84)** and in this way ensures that the modulated laser light passes several times through the amplifying medium **(84)**
that below a first exit point of the modulated laser light **(75)** at the crystal **(84)** there is also a mirror **(79)** which is tilted at an angle **(80)** less than a right angle to an incoming light beam **(75A)** in order to enable separation of incoming from outgoing laser light **(75).**

2. Layout for the generation of amplified laser light for optical communication in space, especially under space conditions, in which means for the generation of unmodulated laser light **(12)** are connected to means for the onward transmission **(13)** with maintenance of polarity of the unmodulated laser light, to an electro-optical modulator **(14)** and to means for the onward transmission of the modulated laser light **(15)** to an optical isolator **(16),**
**characterized in that**
the electro-optical modulator **(14)** is a phase modulator,
the optical isolator **(16)** conveys the modulated laser light in the form of a free collimated beam **(17)** into the optically pumped solid state amplifier **(18),** to which a further optical isolator **(19)** with beam-shaping optics is connected by an optical fibre **(18A),**
that the solid-state amplifier **(18)** is pumped by diode laser,
that the solid-state amplifier **(18)** contains for use as its amplifying medium a crystal **(84)** which has polarization-selective and reflective layers on its outer surfaces,
that in the area of one interface of the crystal **(84)** there is a quarter-wave plate **(78)** and in this way the modulated laser light is enabled to pass several times through the amplifying medium **(84),** and
that below a first exit point of the modulated laser light **(75)** at the crystal **(84)** there is also a mirror **(79)** which is tilted at an angle **(80)** less than a right angle to an incoming light beam **(75A)** in order to enable separation of incoming from outgoing laser light **(75).**

3. Layout in accordance with Claim **2**,
**characterized in that**
the polarization beam splitter **(32)** is present in multiple form, and
that it is connected to at least one movable half-wave plate **(35)** to ensure that the emissions from at least three polarized diode lasers **(30)** are precisely directed onto the solid-state amplifier **(34).**

4. Layout in accordance with Claim **2** or **3,**
**characterized in that**
the optical solid state amplifier **(18)** pumped by diode lasers **(65, 66)** contains a crystal **(68)** usable as an amplifying medium, and
that this crystal **(68)** possesses on its outer surfaces a polarization-selective coating **(69),** reflective layers **(74)** and a quarter-wave plate **(67)** and in this way causes the light for amplification to pass several times through the amplifying medium **(68).**

5. Layout in accordance with one of Claims **2** to **4,**
**characterized in that**
in series with the means for the generation of unmodulated laser light **(12)** consisting of two orthogonally polarized emissions from two pump light sources **(20, 21),** a polarization beam splitter **(24)** is connected, by means of which the light is conducted as a single beam **(26)** to the optically pumped solid-state amplifier (laser crystal) **(27).**

6. Layout in accordance with one of Claims **2** to **5,**
**characterized in that**
for the individual alignment of the emissions from the pump light sources **(20, 21, 30),** adjustable lenses **(22, 23, 31)** are provided.

7. Layout in accordance with one of Claims **2** to **6**
**characterized in that**
the optical solid state amplifier **(18)** pumped by diode lasers **(65, 66)** is equipped with a layout **(69, 70, 71)** usable repeatedly as an optical isolator **(16, 19),** including a Faraday rotator **(70),** the polarity-selective coating **(69)** and a polarization beam splitter **(71)**.

8. Layout in accordance with one of Claims **4** to **7,**
**characterized in that**
below a first exit point of the light beam **(75)** for amplification, at the crystal **(84)** usable as a medium of amplification, there is a reflecting mirror **(79)** which makes it possible to separate the incoming from the outgoing beam of light for amplification **(75)** without any supplementary Faraday rotator and polarization beam splitter, the mirror **(79)** being tilted at a small angle **(80)** to the incoming light beam.

9. Layout in accordance with one of Claims **4** to **8**
**characterized in that**
the amplifying medium is divided into two crystals **(93, 96)** positioned in contact with each other and connected together by a polarity-selective layer **(95)** on one surface of each.

10. Layout in accordance with one of Claims **4** to **9**
**characterized in that**
diversion of the incoming beam of light **(90)** through the amplifying medium of the two contiguously positioned crystals **(93, 96)** to the amplified outgoing beam **(111)** is effected by means of two quarter-wave plates **(98, 100)**.

## Revendications

1. Procédé servant à l'exploitation d'un système laser pour des communications optiques dans l'espace libre, notamment pour la production de lumière laser amplifiée dans les conditions de l'espace extra-atmosphérique, l'émission d'un laser solide non modulé à diodes ou pompé par des diodes **(12)** et émettant sur une fréquence optique étant soumise à une modulation **(14),** le faisceau collimaté **(17)** étant ensuite amené dans un amplificateur solide à pompage optique **(18)** au moyen d'une fibre optique **(18A)** vers une optique de modelage de faisceau **(19),**
**caractérisé en ce que**
l'émission est modulée en phase dans le modulateur électrooptique **(14)** afin de générer de la lumière laser modulée,
l'isolateur optique **(16)** guide la lumière laser modulée, sous forme d'un faisceau libre collimaté **(17),** dans l'amplificateur solide à pompage optique **(18)**,
**en ce que** l'amplificateur solide **(18)** comprend un cristal **(84),** servant de milieu amplifiant, qui présente sur ses faces externes des couches à sélection de polarisation et réfléchissantes, et **en ce qu'**une lame quart d'onde **(78)** est prévue dans la zone d'une surface limite du cristal **(84),** de sorte que la lumière laser modulée effectue de multiples passages à travers le milieu productif de gain **(84),**
**en ce qu'**un miroir **(79)** est en outre placé près du cristal **(84),** sous un premier point de sortie de la lumière laser modulée **(75)**, et est basculé d'un angle inférieur **(80)** à l'angle droit par rapport à un faisceau lumineux incident **(75A),** afin de permettre une séparation de la lumière laser modulée **(75)** entrante et sortante.

2. Dispositif destiné à générer de la lumière laser amplifiée pour des communications optiques dans l'espace libre, notamment dans les conditions de l'espace extra-atmosphérique, des moyens servant à générer de la lumière laser non modulée **(12)** étant reliés à des moyens servant à transmettre **(13),** en maintenant la polarisation **(13),** la lumière laser non modulée vers un modulateur électrooptique **(14),** et à des moyens servant à transmettre la lumière laser modulée **(15)** vers un isolateur optique **(16)**,
**caractérisé en ce que**
le modulateur électrooptique **(14)** est un modulateur de phase,
l'isolateur optique **(16)** guide la lumière laser modulée sous forme d'un faisceau libre collimaté **(17)** dans l'amplificateur solide à pompage optique **(18),** auquel est relié, au moyen d'une fibre optique **(18A)**, un autre isolateur optique **(19)** muni d'une optique de modelage de faisceau,
**en ce que** l'amplificateur solide **(18)** est pompé par des diodes laser,
**en ce que** l'amplificateur solide **(18)** comprend un cristal **(84),** servant de milieu amplifiant, qui est doté, sur ses faces externes, de couches à sélection de polarisation et réfléchissantes,
**en ce qu'**une lame quart d'onde **(78)** est prévue dans la zone d'une surface limite du cristal **(84)** et permet ainsi que la lumière laser modulée effectue de multiples passages à travers le milieu productif de gain **(84),** et
**en ce qu'**un miroir **(79)** est en outre placé près du cristal **(84),** sous un premier point de sortie de la lumière laser modulée **(75),** et est basculé d'un angle inférieur **(80)** à l'angle droit par rapport à un faisceau lumineux incident **(75A),** afin de permettre une séparation de la lumière laser modulée **(75)** entrante et sortante.

3. Dispositif conforme à la revendication **2,**
**caractérisé en ce que**
le séparateur de faisceau à polarisation **(32)** est prévu en plusieurs exemplaires et qu'il est relié à au moins une lame demi-onde mobile **(35)** permettant qu'au moins les émissions de trois lasers à diodes polarisés **(30)** soient précisément orientées sur l'amplificateur solide **(34).**

4. Dispositif conforme à la revendication **2** ou **3,**
**caractérisé en ce que**
l'amplificateur solide optique **(18)** pompé par des lasers à diodes **(65,66)** comprend un cristal **(68)** servant de milieu amplifiant, et
**en ce que** ce cristal (**68**) est muni, sur ses faces externes, d'un revêtement (**69**) à sélection de polarisation, de couches réfléchissantes (**74**) ainsi que d'une lame quart d'onde **(67),** et qu'il suscite ainsi les multiples passages de la lumière à amplifier à travers le milieu productif de gain **(68).**

5. Dispositif conforme à l'une des revendications **2** à **4,**
**caractérisé en ce que**
un séparateur de faisceau à polarisation **(24)** est placé en aval des moyens servant à générer la lumière laser non modulée (**12**) à partir de deux émissions, polarisées de façon orthogonale, de deux sources de lumière de pompage **(20, 21),** au moyen duquel un faisceau unique **(26)** est amené conjointement à l'amplificateur solide (cristal de laser) à pompage optique **(27).**

6. Dispositif conforme à l'une des revendications **2** à **5,**
**caractérisé en ce**
**qu'**il est muni de lentilles réglables **(22, 23, 31)** destinées à orienter individuellement les émissions des sources de lumière de pompage (**20, 21, 30**).

7. Dispositif conforme à l'une des revendications **2** à **6,**
**caractérisé en ce que**
l'amplificateur solide optique **(18)** pompé par des lasers à diodes **(65, 66)** comporte un dispositif servant **(69, 70, 71)** à plusieurs reprises d'isolateur optique **(16, 19)** et comprenant un rotateur de Faraday **(70)**, le revêtement à sélection de polarisation (69) et un séparateur de faisceau à polarisation (**71**).

8. Dispositif conforme à l'une des revendications **4** à **7,**
**caractérisé en ce**
**qu'**un miroir réfléchissant **(79)** est en outre placé près du cristal **(84)** servant de milieu productif de gain, sous un premier point de sortie de la lumière laser à amplifier (**75**), et permet la séparation de la lumière laser à amplifier (**75**) entrante et sortante sans rotateur de Faraday supplémentaire ni séparateur de faisceau à polarisation, le miroir (**79**) étant basculé d'un angle faible (**80**) par rapport au faisceau lumineux incident.

9. Dispositif conforme à l'une des revendications **4** à **8,**
**caractérisé en ce que**
le milieu productif de gain est réparti dans deux cristaux **(93, 96)** placés l'un contre l'autre, reliés l'un à l'autre sur une face par une couche à sélection de polarisation (**95**).

10. Dispositif conforme à l'une des revendications **4** à **9,**
**caractérisé en ce**
**qu'**il est réalisé un coudage du faisceau lumineux incident **(90)** par deux lames quart d'onde (**98, 100**), à travers le milieu productif de gain des deux cristaux (**93, 96**) placés l'un contre l'autre, vers le faisceau de sortie amplifié (**111**).
